# EUROPÄISCHE PATENTSCHRIFT

(11) **EP 3 921 222 B1**
(45) Veröffentlichungstag und Bekanntmachung des Hinweises auf die Patenterteilung: **27.08.2025**
(21) Anmeldenummer: 20718528.1
(22) Anmeldetag: 03.02.2020
(51) Int. Cl.: B62J 9/21, B62J 9/23, B62J 9/28, A45C 3/04, A45C 7/00, A45C 11/20, A45C 13/02

(54) **KORB**
BASKET
PANIER

(30) Priorität: 08.02.2019 DE 202019000626 U
(43) Veröffentlichungstag der Anmeldung: 15.12.2021
(73) Patentinhaber: Ortlieb, Hartmut, 91560 Heilsbronn (DE)
(72) Erfinder: Ortlieb, Hartmut, 91560 Heilsbronn (DE)
(74) Vertreter: Schuhmann, Albrecht
(86) Internationale Anmeldenummer: PCT/DE2020/000014
(87) Internationale Veröffentlichungsnummer: WO 2020/160723

(56) Entgegenhaltungen:
- DE-A1- 102011 119 446
- DE-U1- 202007 004 608
- DE-U1- 202009 018 267
- DE-U1- 29 503 004
- DE-U1- 29 507 304
- DE-U1- 29 603 411
- DE-U1- 29 813 870
- JP-A- 2005 306 164
- US-A- 3 396 885
- US-A- 4 460 114

## Beschreibung

Die vorliegende Erfindung betrifft einen Korb, insbesondere ausgebildet zur Verwendung auf einem Fahrzeug wie einem Zwei- oder Dreirad mit einer im Wesentlichen Wannen- oder Korb- förmigen Ausgestaltung mit einem steifen und/oder versteiften Bodenbereich, einer umlaufenden Seitenwandung und einem oberen offenen oder zu öffnenden Bereich, wobei der Korb über Halte- oder Befestigungsmittel verfügt oder für solche, zur reversiblen Anbringung an einem Träger oder einer Aufnahme an einem Fahrzeug, ausgerüstet ist.

Für die genannte Verwendung sind verschiedene Körbe oder Taschen bekannt, welche sich auch beispielsweise mittels vorgesehener Halterungen oder Adaptern an beispielsweise Fahrrädern zur Mitnahme befestigen lassen. Bekannt sind derartige Taschen oder Körbe insbesondere als Fahrradkörbe zur Befestigung auf einem Fahrradgepäckträger oder an der Lenkerstange. Sehr oft sind derartige Fahrradkörbe relativ stabil als Drahtkörbe ausgebildet, welche dann fest auf dem hinteren Gepäckträger eines Fahrrades montiert werden. Ebenfalls mitzuführende Einkaufstaschen oder Handtaschen werden dann zur Beförderung während der Fahrt in den Korb hineingelegt oder in diesem befestigt. Die Ausführung der bekannten Fahrradkörbe ist dabei beispielsweise sehr offen, wie in der Ausführung nach der DE 20 2014 100 015 U1 gelöst, welche relativ wenig Stangen und Streben aufweist und in welche vorgesehen ist seine zu befördernden Gegenstände oder Einkäufe in wiederum Tüten, Taschen oder anderen Gebinden zu transportieren. Auch bekannt sind Körbe, welche ebenfalls fest am Fahrrad montiert werden und über feinmaschigere Gitterstrukturen aus Metall oder Kunststoff für den Korbkörper verfügen. Eine derartige Ausführung ist in der DE 20 2014 010 618 U1 gezeigt, in welcher der Korb an der Lenkerstange oder der Sattelstütze eines Fahrrades montiert werden kann. Die vorgenannten Körbe verstehen sich dabei, als am Fahrrad gebildete Transportmöglichkeiten für Einkäufe oder andere zu befördernde Gegenstände, die gleichzeitige Verwendung als Einkaufskorb oder Einkaufstasche ist dabei meist nicht oder nur eingeschränkt möglich. Bekannte Einkaufskörbe oder Einkaufstaschen, wie in einer Ausführung nach der DE 20 2012 102 641 U1 offenbart bieten zwar für den Einkauf ein besseres Handling, verfügen aber oft über keine oder unzureichende Stabilität und Halte bzw. Befestigungsmöglichkeiten für das Mitführen auf oder an einem Fahrrad.

Nachteilig bei den bekannten Fahrradkörben, Taschen oder Einkaufstaschen ist weiter der durch den offenen Zugang oder Öffnung der Taschen oder Körbe bedingte, fehlende Schutz des Korbinhalts gegen Umwelt- oder Wettereinflüsse wie Regen oder Schnee. Auch wenn hierfür Körbe oder Taschen bekannt sind, welche mit einem sogenannten Schneefang ausgerüstet sind, bei welchen eine Abdeckhaube über dem Korb angeordnet ist und diese sich mittig zu einem Zopf raffen lässt, versagen diese Schutzhauben bei längeren Fahrten im Regen oder Schnee. Das Wasser bleibt dabei auf der Abdeckung stehen und kann nicht abließen, was nach einiger Zeit durch die Haube oder durch den Raffbereich der Abdeckhaube auch in das Innere des Korbes dringt und den Inhalt schädigt.

Die DE 20 2009 018 267 U1 offenbart einen Korb nach dem Oberbegriff des Anspruchs 1. Wünschenswert wäre die Möglichkeit einen, sicher am Fahrrad transportierbaren Korb gleichwohl als Einkaufskorb oder Einkaufstasche verwenden zu können. Aufgabe der vorliegenden Erfindung ist es daher die Nachteile der bekannten Fahrradkörbe zu vermeiden und einen dahingehend verbesserten Korb oder eine Tasche zu schaffen, welche entsprechend leicht ausgeführt ist, über eine ausreichende Stabilität zur Anbringung am Fahrrad oder einem anderen Fahrzeug verfügt und mit einer gut handelbaren Befestigungsvorrichtung zur reversiblen Anbringung des Korbes oder der Tasche am Fahrrad verfügt.

Diese Aufgabe wird mit den Merkmalen des kennzeichnenden Teils des Anspruchs 1 gelöst. Fortbildungen und vorteilhafte Ausführungen der Erfindung sind in den weiteren Ansprüchen umfasst.

Erfindungsgemäß ist ein Korb mit einer im Wesentlichen Wannen- oder Korb- förmigen Ausgestaltung mit einem steifen und/oder versteiften Bodenbereich, einer umlaufenden Seitenwandung und einem oberen, offenen oder zu öffnenden Bereich der in diesem offenen oder zu öffnenden Bereich mit einem steifen, im Wesentlichen Oval-, Langloch- oder Rechteck- förmigen, umlaufenden Rahmen ausgebildet ist, wobei der Rahmen mit wenigstens an seiner, dem Innenbereich abgewandten Fläche, eine im Wesentlichen umlaufende Nut, zur Aufnahme für ein Spann- und/oder Haltemittel einer dichtenden, insbesondere regendichten Abdeckhaube aufweist.

Insbesondere ist eine Tasche, ein Korb oder ein Behältnis, insbesondere ausgebildet zur Verwendung auf einem Fahrzeug wie einem Zwei- oder Dreirad mit einer im Wesentlichen Wannen- oder Korb- förmigen Ausgestaltung mit einem steifen und/oder versteiften Bodenbereich, einer umlaufenden Seitenwandung und einem oberen offenen oder zu öffnenden Bereich, wobei die Tasche, der Korb oder das Behältnis über Halte- oder Befestigungsmittel verfügt oder für solche, zur reversiblen Anbringung an einem Träger oder einer Aufnahme an einem Fahrzeug, ausgerüstet ist, wobei die Tasche oder der Korb im Bereich des oberen offenen oder zu öffnenden Bereichs mit einem steifen, im Wesentlichen Oval-, Langloch- oder Rechteck- förmigen, umlaufenden Rahmen ausgebildet ist wobei der Rahmen mit wenigstens an seiner, dem Innenbereich abgewandten Fläche, eine im Wesentlichen umlaufende Nut, zur Aufnahme für ein Spann- und/oder Haltemittel für eine regendichte Abdeckhaube aufweist.

Der umlaufende Rahmen, welcher bevorzugt aus einem metallischen Material, in einer bevorzugten Ausführung als Aluminium- Strangpressteil ausgeführt ist, verfügt auf seiner dem Innenbereich zugewandten Fläche über eine weitere umlaufende Nut in welcher der eigentliche Taschen- und/oder Korb- Körper, mittels eines Klickkeders, an welchem der bevorzugt flexible Taschenkörper angenäht ist, befestigt ist. Der genannte Klickkeder kann dabei auch als Einschiebekeder oder Keder mit zusätzlichem Klemmelement ausgeführt sein. Der Taschenkörper, der aus einem bevorzugt wasserdichtem, flexiblem Gewebe ausgeführt ist welches an seinen Nähten mit einer wasserdichten Beschichtung versehen ist, ist mit dem Klickkeder oder einer alternativen Kederausführung vernäht oder verschweißt wobei die Naht außerhalb des Regentropfenbereichs verläuft.

In einer bevorzugten Ausführung ist der Taschenkörper mittels des an diesen angenähten Klickkeder in einer, dem Innenbereich zugewandten Nut des umlaufenden, stabilen Rahmens, bevorzugt dichtend angebracht. Der Taschenkörper erstreckt sich von dem oberen Rahmenelement bis zu einem Taschen- oder Korbboden mit welchem der Taschenkörper bevorzugt wasserdicht verbunden, wie verschweißt, verschraubt, vernieten oder ähnlichem Verfahren, ist. Der Boden selbst ist dabei bevorzugt steif und/oder mit Versteifungen versehenen Mitteln ausgeführt und verfügt auf seiner Unterseite bevorzugt über Standfüße und/oder wenigstens eine Haltevorrichtung zur Anbringung des Korbes oder der Tasche an einem Träger eines Fahrrades.

Der Rahmen, welcher bevorzugt in Metall und hier insbesondere in Aluminium ausgebildet ist, verfügt an seiner, dem Innenbereich abgewandten Fläche über eine weitere Nut, in welche ein Spannmittel korrespondierbar einbringbar ist, welches bevorzugt als Spanngummi ausgebildet ist und in der bevorzugten Ausführung an einer regendichten Abdeckhaube zur Anordnung über der Korb- oder Taschenöffnung angeformt oder angenäht oder angeschweißt ist. Der Spanngummi dichtet dabei die Abdeckhaube an der Nut der äußeren Fläche des umlaufenden Rahmens ab womit auf die Abdeckhaube fallendes Regenwasser auf der Abdeckhaube entlangläuft und am Spanngummi oder Spannelement nach unten abfällt und wirkungsvoll vom Eintritt in den Innenbereich der Tasche oder des Korbes abgehalten wird. Alternativ oder als einfache Variante kann eine regedichte Abdeckhaube auch als einfacher, regendichter Überzieher über den Öffnungsbereich gelegt werden und mittels eines Spanngummis, welcher mit der Nut auf der Außenseite des Rahmens korrespondiert übergezogen werden.

An dem Klickkeder, an welchem der Taschenkörper angebracht ist und dieser in der, der Innenfläche des Rahmens zugewandten Nut des Rahmens dichtend eingebracht ist, kann in einer bevorzugten Variante ein oder mehrere Korbzubehörelemente angebracht sein. Diese Korbzubehörelemente sind bevorzugt eine Innentasche im Korb oder Halteelemente für beispielsweise Geldbörsen, Schlüssel oder dergleichen.

Der eigentliche Korbkörper oder die Seitenwandungen, welche zum Korbkörper verbunden sind, sind bevorzugt wasserabweisend und/oder wasserdicht, wenigstens aber regenabweisend ausgeführt und in einer Ausführung, bestehend aus miteinander verbundenen Einzelteilen, wenigstens an den Verbindungsstellen oder Nähten, wasserdicht ausgebildet was durch Verschweißen oder Beschichtungen erfolgt. Der Boden und/oder der Bodenbereich der Tasche, des Korbes oder des Behälters ist dabei bevorzugt steif ausgebildet, wobei der eigentliche Korbkörper dazu vergleichbar flexibel und/oder zusammendrückbar ist.

In einer weiteren Variante ist der Bodenbereich und/oder der Innenbereich des Korbes oder der Tasche isoliert ausgeführt, wie beispielsweise mit einer Auskleidung des Bodens und der inneren Seitenwandungen mit einem isolierenden Material, welches herausnehmbar oder alternativ fest mit den Innenflächen des Korbes verbunden eingebracht ist. In dieser Ausführung ist der Korb oder die Tasche ideal als Kühl- oder Warmhalte Tasche oder Korb verwendbar. Die isolierenden, Elemente lassen sich in einer bevorzugten Ausführung herausnehmen und die seitlichen oder die innere Seitenwandung bildenden Isolierelemente bilden dabei bevorzugt eine seitliche Versteifung des ansonsten mehr flexibel ausgeführten Korbkörpers. In einer dahingehenden Ausführung zur Verwendung als Kühl- oder Warmhaltebehältnis ist der gesamte Korbkörper sowie die Abdeckhaube bevorzugt luftdicht ausgeführt um eine möglichst gute Isolation des Innenkörpers gegen die Umgebung zu gewährleisten. Insbesondere dafür aber auch zur Abdichtung gegen Regenwasser oder Schwitzwasser oder andere Feuchtigkeit ist auch die Verbindung des Klickkeders in der Nut auf der Innenfläche des Rahmens dichtend ausgebildet.

In der bevorzugten Ausführung, auch in der Ausführung ohne isolierende Elemente oder Seitenteile im Inneren des Korbkörpers ist der Boden und/oder die Bodenversteifung mit wenigstens einem form- und/oder kraftschlüssigen Verbindungsmittel für wenigstens ein vertikales Seitenversteifungsmittel ausgerüstet. In der Regel oder in der bevorzugten Ausführung ist die Tasche oder der Korb mit zwei vertikalen Seitenversteifungsmitteln, welche bevorzugt reversibel zur Anbringung vorgesehen sind, ausgerüstet, welche bevorzugt links und rechts am Korb in Fahrtrichtung und/oder Tragerichtung anbringbar ausgeführt sind.

Der Boden und/oder die Bodenversteifung verfügt dazu über Halte oder Fixierpunkte in welche ein vertikales Seitenversteifungselement leicht eingebracht werden kann und den Korbkörper zwischen oberen Rahmen und dem Bodenbereich in Form hält. Durch die Möglichkeit, die vertikalen Seitenversteifungselemente leicht entnehmen zu können, kann der Korb oder die Tasche im Bedarfsfall sehr kompakt und platzsparend zusammengedrückt werden, was insbesondere beim Versand nach Kauf oder zur Aufbewahrung und/oder der Lagerung des Korbes oder der Tasche sehr positiv ist. Die vertikalen Seitenversteifungselemente sind dabei bevorzugt zwischen dem Aufnahmeelement im Bodenbereich und Angriffspunkten am und/oder unter dem Rahmen als seitliche Zwischenstücke einbringbar wobei das Zwischenstück am Rahmen oder an der Seitenwandung des Korbes, der Tasche oder des Behälters angebracht ist. An den beiden, sich bezüglich des umlaufenden Rahmens gegenüberliegenden Zwischen- und/oder Haltestücken lässt sich verbindend eine Tragemittel, welches bevorzugt als Tragehenkel oder Tragebügel ausgebildet ist, jeweils drehbar an den Zwischen- oder Haltestücken anbringen. Hierdurch kann der Tragebügel einfach weggeklappt werden und stört nicht bei der Befüllung des Korbes oder überziehen der regendichten Abdeckhaube und kann jederzeit zum bequemen Tragen wieder nach oben geklappt werden. Für wenigstens diese beiden Positionen hat sich eine vorgesehene Arretierung in den Zwischenstücken als vorteilhaft erwiesen, welche beispielsweise ein unbeabsichtigtes Umklappen der Tragebügels beim Abstellen des Korbes verhindert. Weiter erhält man durch diese und alle vorgenannten Ausführungen einen sehr klaren und puristischen Look des Korbkörpers. Für ein komfortables Tragen des Korbs am Tragebügel ist dieser im Griffbereich mit einem U-Profil zum angenehmen Umgreifen ausgeführt.

In seiner bevorzugten Ausführung ist der Korb mit wenigstens einer, eine Zwischenposition für die Abdeckhaube über dem Rahmen und somit Öffnung des Korbes ermöglichenden Position der Abdeckhaube ausgerüstet. Hierzu sind an der Abdeckhaube und an dem umlaufenden Rahmen und/oder am Taschenkörper oder an den Zwischenstücken miteinander korrespondierende Haltemittel angeordnet. Somit kann die Abdeckhaube in einer Position über dem Rahmen fixiert werden in welcher die Abdeckhaube den Rand des Rahmens der Öffnung nicht vollständig überspannt, sondern einen definierten Zugang zum Inneren des Korbes offenhält. In dieser Position kann beispielsweise sehr bequem in den Korb hineingegriffen werden ohne die regendichte Abdeckhaube komplett zu öffnen oder diese entfernen zu müssen.

Der Bodenbereich ist auf der des Innenbereichs des Korbes oder der Tasche entgegenliegenden Fläche bevorzugt mit Standfüßen und/oder einer Befestigungsvorrichtung zum Anbringen des Korbes an einem Träger, insbesondere auf einem Gepäckträger eines Fahrrades oder Motorrades oder ähnlichen Fahrzeugs ausgeführt. Damit kann der Korb einfach auf dem Boden abgestellt werden ohne dass die komplette Unterseite des Korbes verschmutz wird.

In der bevorzugten Ausführung ist der Korb mit einer Haltevorrichtung zum Befestigen des Korbes an oder im Bereich eines Fahrradlenkers ausgerüstet, wobei die Halterung bevorzugt als Lenkeradapter ausgeführt ist und ein reversibles Befestigen des Korbes an einem korrespondierenden Gegenstück am Lenker eines Fahrrades erlaubt. Der Lenkeradapter des Korbes ist dabei bevorzugt am stabilen Rahmen, der den oberen Umlaufrand des Korbes oder der Tasche bildet, angebracht und hier bevorzugt in der Form, dass der Lenkeradapter mit dem Rahmen verbunden ist und/oder die Enden des umlaufenden Profils des Rahmens in dem Lenkeradapter aneinanderstoßend oder gegeneinander laufend, stabil eingebracht und/oder fixierbar sind.

In einer weiteren, bevorzugten Ausführung ist die Abdeckhaube, welche über eine Anschweißfahne verfügt, mit dieser Anschweißfahne an oder über dem Lenkeradapter angeordnet oder über diesen anbringbar ausgeführt. Hierbei ist die Anschweißfahne der Abdeckhaube verbreitert, über den Lenkeradapter ragend ausgebildet und die Abdeckhaube mit an deren Rand angebrachten Spannmittel ausgeführt. Das Spannmittel, bevorzugt als Spanngummi ausgebildet, ist dabei bevorzugt an dem Umlaufrand der Abdeckhaube angeschweißt oder mit diesem verbunden angebracht. Bevorzugt ist die Abdeckhaube über das Spannmittel geschweißt, dicht ausgeführt. Alternativ kann ein Spanngummi auch übergreifend über die, über den Rand des Rahmens ragenden Abdeckhaube, übergestülpt werden um einen Regenschutz zu schaffen.

Im Folgenden wird die Erfindung anhand von Zeichnungen rein beispielhaft näher beschrieben. Dabei zeigen:
Fig. 1 eine perspektivische Ansicht eines geschlossenen Korbes,
Fig. 2 eine perspektivische Ansicht eines teil- geöffneten Korbes,
Fig. 3 eine Detaildarstellung des Rahmens mit überspannter Abdeckhaube und angebrachtem Korbkörper,
Fig. 4 eine Schnittdarstellung durch einen Korb,
Fig. 5 eine Schnittdarstellung durch einen Korb mit Isolierung,
Fig.6 eine Schnittdarstellung durch einen Korb mit stützender Isolierung,

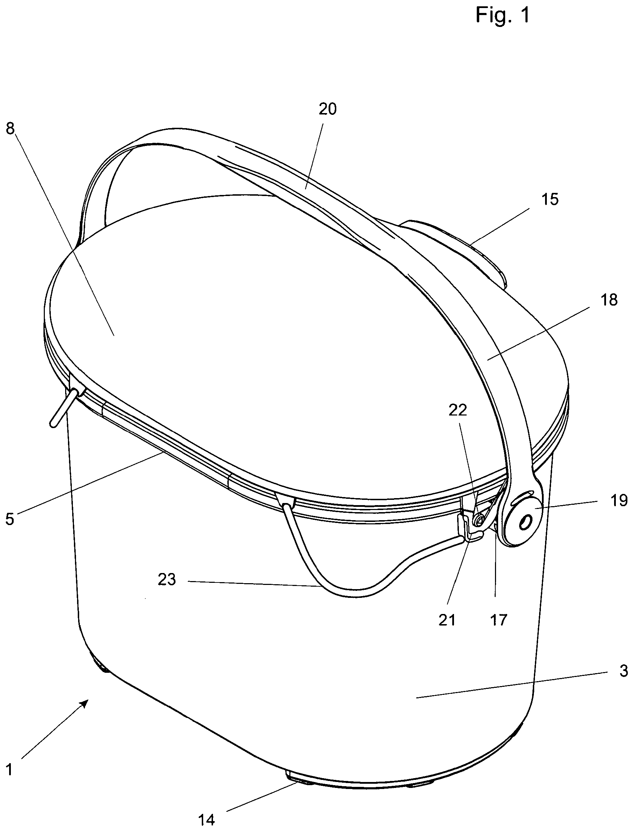

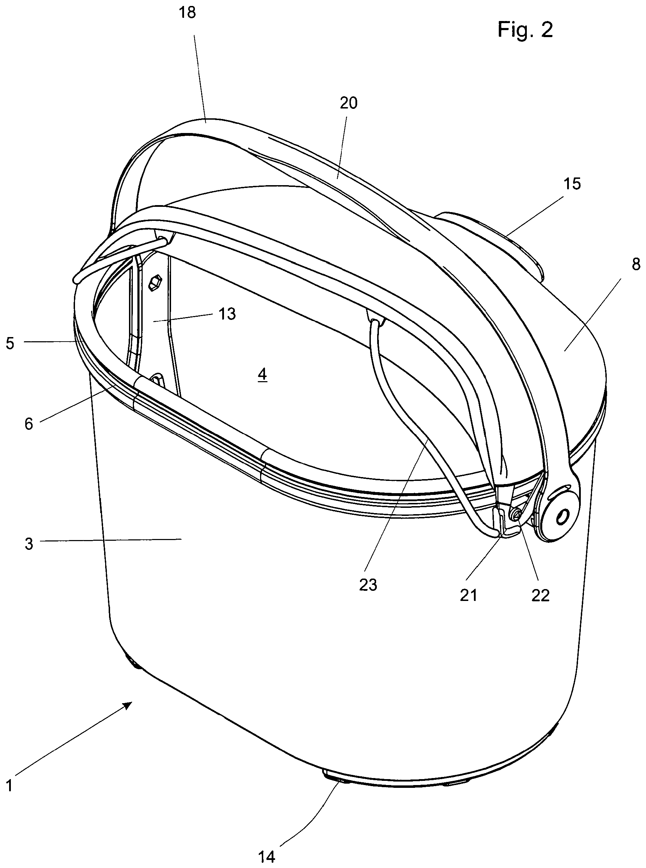

In der Fig. 1 ist eine erfindungsgemäße Tasche oder ein Korb 1 gezeigt über dessen Öffnungsbereich eine, den Öffnungsbereich verschließende oder abdeckende, regendichte Abdeckhaube 8, gespannt ist. Der Korb ist dabei, wie in dieser Ausführung gezeigt, mit einem umlaufenden, steifen, Oval- förmigen Rahmen 5, an welchen der flexible, aus einem Gewebe oder Textil und/oder Kunststoff bestehende Korbkörper 3 angeordnet und/oder anbringbar ist, ausgebildet. Die Abdeckhaube 8 lässt sich dabei mit einem, an deren Umlauf angeordnetem Spannmittel, wie einem Gummiband oder ähnlichem über den Rahmen 5 spannen, wobei deren Umrandung in eine an der Außenseite des Rahmens eingebrachte Nut 6 eingreift und dort gehalten wird. Dies kann in einer nicht gezeigten Variante auch mit einer am Rahmen angeordneten Kante erreicht werden. Der Korbkörper 3 selbst ist bevorzugt aus einem textilen oder kunststoff-, verformbaren Material, welches beschichtet sein kann wodurch dieser wenigstens regendicht und leicht abwaschbar ist. Der in Fig. 1 und Fig. 2 gezeigte Korb, welcher beispielsweise als Einkaufskorb verwendet werden kann besitzt dafür einen Tragebügel 18, welcher an seitlichen Zwischenstücken 17, drehbar oder klappbar über die Korböffnung positioniert werden kann. Das Zwischenstück 17 ist an dem Rahmen 5 und/oder an dem Bereich des Korbkörpers 3 befestigt und verfügt für die Anbringung des Tragebügels 18 eine Aufnahme für eine Schraubenscheibe 19.

Der in Fig. 1 und Fig. 2 gezeigte Korb verfügt weiter über die Möglichkeit, die Abdeckhaube 8 auch in einer definierten, nicht vollständig geschlossenen Position über dem Öffnungsbereich zu fixieren. In dieser, zum Teil geöffneten Position der Abdeckhaube über dem Öffnungsbereich ist ein einfacher und schneller Zugriff zum Inneren des Korbes möglich. Hierzu verfügt die Abdeckhaube an ihrem Umlauf über Haltemittel 21, welche korrespondierend mit an dem Zwischenstück 17 und/oder am Rahmen 5 angeordneten Angriffen 22, fixierbar sind. In der gezeigten Ausführung sind die Angriffe Knopf- artig ausgebildet und die als Schlaufe oder Öse ausgeformten Haltemittel 21 am Umlauf der Abdeckhaube lassen sich über diese Angriffe spannen und in dieser Position, wie in Fig. 2 gezeigt, fixieren. Zur einfachen Bedienung der Abdeckhaube und genauen Positionierung verfügt der Umlauf der Abdeckhaube vorzugsweise über wenigstens eine Handhabe 23 mittels welcher die Abdeckhaube bequem über dem Rahmen spannbar ist und der Rand in die Nut eingebracht werden kann oder die Haltemittel korrespondierend an den Angriffen, zur teilweisen Öffnung angebracht werden.

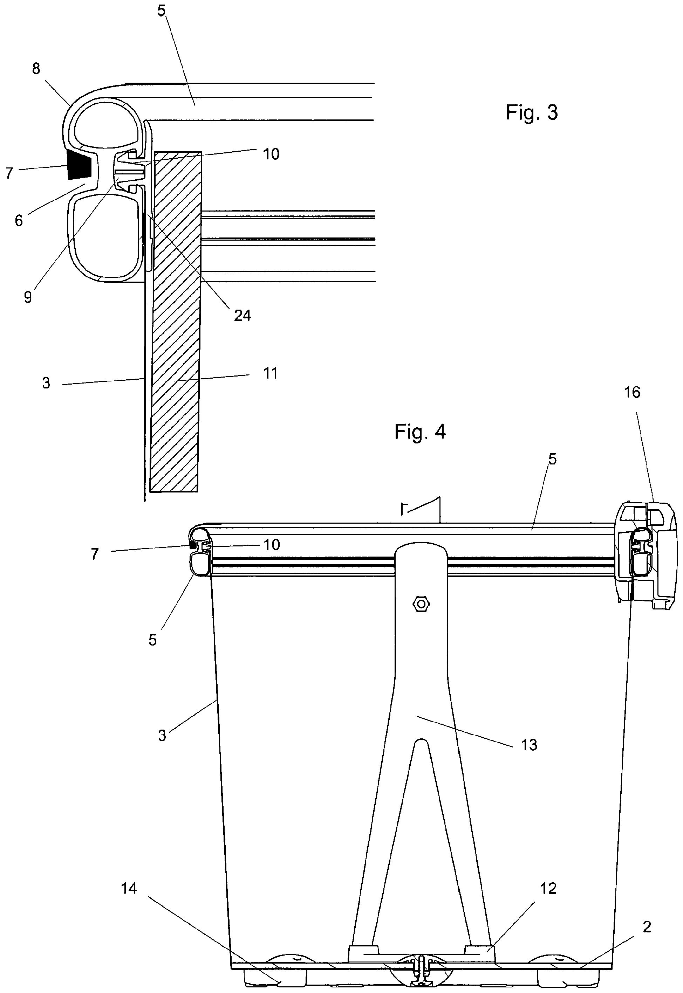

In der Detailansicht Fig. 3 ist ein Schnitt durch einen Korb gezeigt in welchem der Rahmen 5 mit einer, dem Innenbereich des Korbes abgewandten Nut 6 zu sehen ist. Die Abdeckhaube 8 ist über den Korb und den Rahmen 5 gespannt und mit einem Spannmittel 7 in der Nut 6 fixiert. In dieser Position läuft, auf die regendichte Abdeckhaube fallendes Wasser, an dieser seitlich ab und tropft an dem Übergang und/oder Ende von Abdeckhaube und Spannmittel ab. Der Korbkörper 3 oder genauer gesagt, dessen Seitenwandung 3 ist in seinem oben offenen Bereich mit einem angebrachten, umlaufenden Klickkeder 10 ausgerüstet, welcher an den Seitenrand 3 angenäht und/oder angeschweißt oder verklebt ist. Der Klicckeder 10 greift in eine auf der Innenseite des Rahmens 5 eingebrachte Nut 9 ein und verankert den Korbkörper 3 mit dem Rahmen 5. Alternativ kann die Befestigung des Korbkörpers an dem Rahmen auch mit einem Schiebekeder oder einem Fixier- und Klemmittel oder einer Schraub- oder Klebeverbindung erfolgen. Durch die Position des vernähten Bereiches 24 zwischen Klickkeder 10 und Korbkörper 3 oberhalb der Rahmenunterkante kommt der Bereich der Naht zwischen Klickkeder 10 und Seitenwandung 3 außerhalb des Regentropfenbereichs zu liegen.

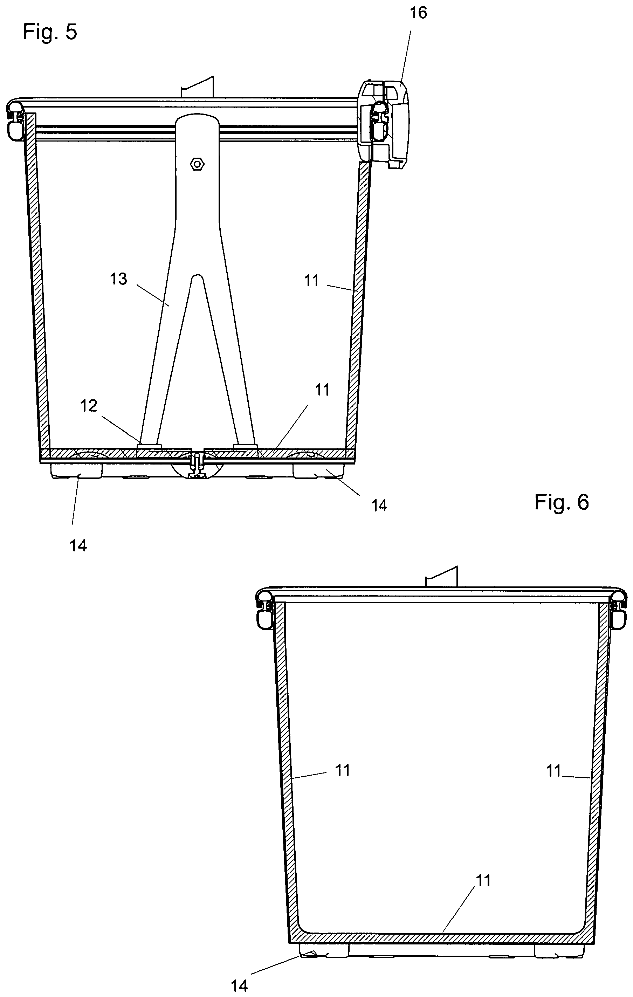

Durch den flexiblen, beispielsweise aus einem textilen Material bestehenden Korbkörper lässt sich der gesamte Korb auch sehr einfach zusammenfalten oder zusammenlegen und optimiert lagern, versenden, verpacken oder bei längerem Nichtgebrauch, platzsparend aufbewahren. In der bevorzugten Nutzung als Fahrradkorb und/oder Einkaufskorb ist jedoch eine wenigstens leichte Versteifung des Korbkörpers erwünscht. Hierzu sind nach einer bevorzugten Variante vertikale Versteifungselemente 13 im Inneren des Korbes reversibel angeordnet. Die Versteifungselemente 13 sind dabei, wie in Fig. 4 und Fig. 5 gezeigt zwischen dem versteiften Boden 2 oder einer Versteifung im Boden und dem Zwischenstück 17 am Rahmen 5 und/oder dem Bereich des Korbkörper um das Zwischenstück lösbar angeordnet. In einer in Fig. 4 gezeigten Ausführung ist die vertikale Versteifung Y- förmig ausgebildet und im Bodenbereich mit zwei Standbeinen in einer, am Bodenbereich angeordneten Aufnahmevorrichtung 12 abgestützt und in ihrem oberen Bereich am Zwischenstück angeschraubt. Die Aufnahmevorrichtung 12 ist in der gezeigten Variante als steife Platte mit Aufnahmeöffnungen für die Beine der Versteifung ausgeführt, welche mit dem Bodenbereich verschraubt ist. Alternativ können die Aufnahmeöffnungen auch in dem steifen Bodenbereich eingeformt oder angeformt ausgebildet sein. Die dem Inneren des Korbkörpers abgewandte Bodenfläche ist in der hier gezeigten Ausführung mit Standfüßen 14 ausgerüstet auf welchen sich der Korb abstellen lässt ohne das der, textile äußere Bereich des Korbkörpers zwingend mit Schmutz und/oder Feuchtigkeit in Berührung kommt oder der Korb allzu leicht wegrutscht. In einer nicht gezeigten Variante ist der äußere Bodenbereich des Korbes mit einer Haltevorrichtung zum bevorzugt lösbaren Befestigen des Korbes auf einem Fahrradträger oder dergleichen ausgerüstet oder wenigstens dafür vorgesehen.

In einer bevorzugten Ausführung als Fahrradkorb ist an dem oberen Rahmen 5 ein Lenkeradapter 16 angeordnet mittels welchem sich der Korb 1 an einem korrespondierenden Halteelement an einer Lenkerstange lösbar anbringen und befördern lässt. Hierbei werden bevorzugt die Enden des umlaufenden Rahmens in dem Lenkeradapter 16 eingebracht und mit diesem verbunden und/oder der Lenkeradapter an dem Rahmen verschraubt.

In einer weiteren bevorzugten Ausführung ist der Korb oder die Tasche als Kühltasche und/oder Isoliertasche oder Isolierkorb oder Korb mit isolierenden Eigenschaften ausgebildet um darin kalte oder warme Objekte isolierend transportieren zu können. Hierfür ist, wie in Fig. 5 und Fig. 6 gezeigt, der Innenbereich des Korbkörpers mit Isolierelementen 11 ausgekleidet oder auskleidbar ausgeführt. In diesen Varianten ist der Korbkörper 3 bevorzugt aus einem, Luft undurchlässigen Material ausgebildet und die Innenwände des Korbkörpers mit Isoliermaterial ausgekleidet, welche in einer Variante nach Fig. 6 auch eine vertikale Stützfunktion im Innenbereich des Korbkörpers übernehmen.

Nachdem bevorzugte Ausführungen der Erfindung in Bezug auf die beiliegenden Zeichnungen beschrieben wurden, ist festzuhalten, dass die Erfindung nicht auf diese genauen Ausführungen beschränkt ist und dass verschiedene Änderungen und Modifizierungen daran von einem Fachmann ausgeführt werden können, ohne dass vom Umfang der Erfindung, wie er in den beiliegenden Ansprüchen definiert ist abgewichen wird.

## Patentansprüche

1. Korb (1), mit einer im Wesentlichen Wannen- oder Korb- förmigen Ausgestaltung mit einem steifen oder versteiften Bodenbereich (2), einer umlaufenden Seitenwandung (3) und einem oberen, offenen oder zu öffnenden Bereich (4), der in diesem offenen oder zu öffnenden Bereich mit einem steifen, im Wesentlichen Oval-, Langloch- oder Rechteckförmigen, umlaufenden Rahmen (5) ausgebildet ist,
wobei ein durch die umlaufende Seitenwandung (3) gebildeter Korbkörper, der aus einem Gewebe oder Textil und/oder Kunststoff besteht, flexibel ausgeführt ist und an dem steifen umlaufenden Rahmen (5) angeordnet ist,
**dadurch gekennzeichnet,**
**dass** der umlaufenden Rahmen (5) mit wenigstens an seiner, einem Innenbereich abgewandten Fläche, eine im Wesentlichen umlaufende Nut (6), zur Aufnahme für ein Spann- und/oder Haltemittel (7) einer dichtenden Abdeckhaube (8) aufweist,
und **dass** der umlaufende Rahmen (5) an seiner, dem Innenbereich zugewandten Fläche mit einer im Wesentlichen umlaufenden Nut (9) für die Befestigung der den Korbkörper bildenden umlaufenden Seitenwandung (3) ausgerüstet ist.

2. Korb nach Anspruch 1, **dadurch gekennzeichnet, dass** der umlaufende Rahmen in einem metallischen Werkstoff ausgebildet ist oder der umlaufende Rahmen in einem Kunststoff- Werkstoff und/oder in einem Verbund- Werkstoff ausgebildet ist.

3. Korb nach Anspruch 1, **dadurch gekennzeichnet, dass** in der, dem Innenbereich zugewandten Nut (9) des Rahmens ein Klickkeder (10) befestigt ist an welchem der Korbkörper angebracht ist.

4. Korb nach Anspruch 3, **dadurch gekennzeichnet, dass** der Korbkörper (3) mit dem Klickkeder (10) vernäht ist, wobei die Naht außerhalb eines Regentropfenbereichs verläuft.

5. Korb nach Anspruch 3, **dadurch gekennzeichnet, dass** der Klickkeder mit dem angebrachten Korbkörper, weiter mit einem angebrachten oder angenähten Korbzubehör ausgebildet ist.

6. Korb nach Anspruch 1, **dadurch gekennzeichnet, dass** die den Korbkörper bildende umlaufende Seitenwandung wasserdicht ausgeführt ist und den steifen oder versteiften Bodenbereich aufweist.

7. Korb nach Anspruch 1, **dadurch gekennzeichnet, dass** die den Korbkörper bildende umlaufende Seitenwandung und/oder der steife oder versteifte Bodenbereich und/oder die dichtende Abdeckhaube isoliert ausgebildet ist.

8. Korb nach Anspruch 1, **dadurch gekennzeichnet, dass** der steife oder versteifte Bodenbereich (2) mit wenigstens einem form- und/oder kraftschlüssigen Verbindungsmittel (12) für wenigstens ein vertikales Seitenversteifungsmittel (13) ausgerüstet ist,

9. Korb nach Anspruch 8, **dadurch gekennzeichnet, dass** der steife oder versteifte Bodenbereich (2) auf seiner, dem Innenbereich des Korbes abgewandten Seite mit Standfüßen (14) und/oder wenigstens einer Haltevorrichtung zur Anbringung des Korbes an einem Gepäckträger ausgerüstet ist.

10. Korb nach Anspruch 1, **dadurch gekennzeichnet, dass** der Korb mit einem Fahrradlenkeradapter zur Anbringung an einem Fahrradlenker ausgerüstet ist, wobei der Fahrradlenkeradapter mit dem Rahmen verbunden ist und/ oder die Enden des umlaufenden Profils des Rahmens in dem Fahrradlenkeradapter (16) aneinanderstoßend ausgeführt sind.

11. Korb nach Anspruch 1, **dadurch gekennzeichnet, dass** die Abdeckhaube (8) mit dem integrierten Spann- und/oder Haltemittel (7) für die korrespondierende Befestigung in der, an der dem Innenbereich abgewandten Fläche des Rahmens verlaufenden Nut (6), ausgebildet ist

12. Korb nach Anspruch 8, **dadurch gekennzeichnet, dass** das wenigstens eine, zwischen dem steifen oder versteiftem Bodenbereich und dem oberen, steifen Rahmen liegende vertikale Seitenversteifungsmittel (13) zur senkrechten Versteifung des Korbkörpers (3), reversibel ausgeführt ist.

13. Korb nach wenigstens einem der vorgenannten Ansprüche, **dadurch gekennzeichnet, dass** die Abdeckhaube Mittel (21) besitzt, um die Abdeckhaube in wenigstens einer Zwischenposition über und/oder an dem Rahmen zu fixieren und damit eine teilweise, definierte Öffnung oder Verschließung des offenen oder zu öffnenden Bereichs ermöglicht.

## Claims

1. A basket (1), with a substantially tub- or basket-shaped configuration with a rigid or reinforced base region (2), a circumferential side wall (3) and an upper region (4) which is open or which can be opened, which in this region which is open or which can be opened is formed with a rigid circumferential frame (5) having substantially the shape of an oval, an elongated hole or a rectangle,
wherein a basket body, formed by the circumferential side wall (3), which basket body consists of a woven material or textile and/or plastic, is embodied in a flexible manner and is arranged on the rigid circumferential frame (5),
**characterized in that** the circumferential frame (5), with at least on its surface facing away from an inner region, has a substantially circumferential groove (6), for receiving a tightening and/or retaining means (7) of a sealing cover (8),
and that the circumferential frame (5) is equipped on its surface facing the inner region with a substantially circumferential groove (9) for the fastening of the circumferential side wall (3) forming the basket body.

2. The basket according to Claim 1, **characterized in that** the circumferential frame is formed in a metallic material, or the circumferential frame is formed in a plastic material and/or in a composite material.

3. The basket according to Claim 1, **characterized in that** in the groove (9) of the frame facing the inner region a klick keder (10) is fastened, on which the basket body is mounted.

4. The basket according to Claim 3, **characterized in that** the basket body (3) is sewn to the klick keder (10), wherein the seam runs outside a raindrop region.

5. The basket according to Claim 3, **characterized in that** the klick keder is formed with the mounted basket body, furthermore with a mounted or sewn-on basket accessory.

6. The basket according to Claim 1, **characterized in that** the circumferential side wall forming the basket body is embodied in a watertight manner and has the rigid or reinforced base region.

7. The basket according to Claim 1, **characterized in that** the circumferential side wall forming the basket body, and/or the rigid or reinforced base region, and/or the sealing cover, is embodied in an insulated manner.

8. The basket according to Claim 1, **characterized in that** the rigid or reinforced base region (2) is equipped with at least one form- and/or force-fitting connection means (12) for at least one vertical side reinforcement means (13).

9. The basket according to Claim 8, **characterized in that** the rigid or reinforced base region (2) is equipped, on its side facing away from the inner region of the basket, with supporting feet (14) and/or with at least one retaining device for mounting the basket on a luggage carrier.

10. The basket according to Claim 1, **characterized in that** the basket is equipped with a bicycle handlebar adapter for mounting on a bicycle handlebar, wherein the bicycle handlebar adapter is connected to the frame and/or the ends of the circumferential profile of the frame are embodied abutting one another in the bicycle handlebar adapter (16).

11. The basket according to Claim 1, **characterized in that** the cover (8) is configured with the integrated tightening and/or retaining means (7) for the corresponding fastening in the groove (6) running on the surface of the frame facing away from the inner region.

12. The basket according to Claim 8, **characterized in that** the at least one vertical side reinforcement means (13), lying between the rigid or reinforced base region and the upper rigid frame, is embodied in a reversible manner for the perpendicular reinforcement of the basket body (3).

13. The basket according to at least one of the aforementioned claims, **characterized in that** the cover has means (21) in order to fix the cover in at least one intermediate position over and/or on the frame and thus enables a partial, defined opening or closing of the region which is open or which can be opened.

## Revendications

1. Panier (1), d'une conception sensiblement en forme de cuve ou de panier, pourvu d'une zone de fond inférieur (2) rigide ou rigidifiée, d'une paroi latérale (3) périphérique et d'une zone (4) supérieure ouverte ou à ouvrir, qui dans ladite zone ouverte ou à ouvrir, est conçu avec un cadre (5) rigide, de forme sensiblement ovale, de trou oblong ou de rectangle,
un corps de panier constitué par la paroi latérale (3) périphérique, qui consiste dans un tissu ou dans un textile et / ou dans une matière plastique étant conçu en étant souple et étant placé sur le cadre (5) périphérique rigide,
**caractérisé**
**en ce que** le cadre (5) périphérique comporte par au moins sa surface opposée à une zone intérieure une rainure (6) sensiblement périphérique, destinée à recevoir un moyen de serrage et / ou de maintien (7) d'un capot de protection (8) assurant l'étanchéité,
et **en ce que** sur sa surface faisant face à la zone intérieure, le cadre (5) périphérique est équipé d'une rainure (9) sensiblement périphérique, destinée à fixer la paroi latérale (3) périphérique constituant le corps du panier.

2. Panier selon la revendication 1, **caractérisé en ce que** le cadre périphérique est constitué en une matière métallique ou **en ce que** le cadre périphérique est constitué en une matière plastique et / ou en une matière composite.

3. Panier selon la revendication 1, **caractérisé en ce que** dans la rainure (9) du cadre faisant face à la zone intérieure est fixé un bourrelet encliquetable (10), sur lequel est monté le corps du panier.

4. Panier selon la revendication 3, **caractérisé en ce que** le corps de panier (3) est cousu avec le bourrelet encliquetable (10), la couture s'écoulant à l'extérieur d'une zone en goutte de pluie.

5. Panier selon la revendication 3, **caractérisé en ce que** le bourrelet encliquetable avec le corps de panier monté est conçu par ailleurs avec un accessoire de panier monté ou cousu sur lui.

6. Panier selon la revendication 1, **caractérisé en ce que** la paroi latérale périphérique constituant le corps de panier est conçue en étant étanche à l'eau et comporte la zone de fond inférieur rigide ou rigidifiée.

7. Panier selon la revendication 1, **caractérisé en ce que** la paroi latérale périphérique constituant le corps de panier et / ou la zone de fond inférieur rigide ou rigidifiée et / ou le capot de protection assurant l'étanchéité est conçue en étant isolée.

8. Panier selon la revendication 1, **caractérisé en ce que** la zone de fond inférieur (2) rigide ou rigidifiée est équipée d'au moins un moyen d'assemblage (12) par complémentarité de forme et / ou de force pour au moins un moyen de rigidification (13) latérale.

9. Panier selon la revendication 8, **caractérisé en ce que** sur son côté opposé à la zone intérieure du panier, la zone de fond inférieur (2) rigide ou rigidifiée est équipée de pieds (14) et / ou d'au moins un dispositif de maintien, destiné à monter le panier sur un porte-bagages.

10. Panier selon la revendication 1, **caractérisé en ce que** le panier est équipé d'un adaptateur sur guidon de bicyclette, destiné au montage sur un guidon de bicyclette, l'adaptateur sur guidon de bicyclette étant assemblé avec le cadre et / ou les extrémités du profilé périphérique du cadre étant conçues en étant contiguës dans l'adaptateur (16) sur guidon de bicyclette.

11. Panier selon la revendication 1, **caractérisé en ce que** le capot de protection (8) avec le moyen de serrage et / ou de maintien (7) intégré est conçu pour la fixation correspondante dans la rainure (6) s'écoulant sur la surface du cadre opposée à la zone intérieure.

12. Panier selon la revendication 8, **caractérisé en ce que**, pour la rigidification verticale du corps de panier (3), l'au moins un moyen de rigidification (13) latérale situé entre la zone de fond inférieur rigide ou rigidifiée et le cadre supérieur rigide est conçu en étant réversible.

13. Panier selon au moins l'une quelconque des revendications précédentes, **caractérisé en ce que** le capot de protection possède des moyens (21) pour fixer le capot de protection dans au moins une position intermédiaire et / ou sur le cadre et permet ainsi une ouverture ou une fermeture partielle définie de la zone ouverte ou à ouvrir.
